# EUROPEAN PATENT APPLICATION

(11) **EP 1 127 815 A2**
(43) Date of publication of application: **29.08.2001**
(21) Application number: 01104374.2
(22) Date of filing: 23.02.2001
(51) Int. Cl.: B65G 49/06

(54) **Overhead gripping and conveying system for sheets of glass**

(30) Priority: 25.02.2000 IT TO000187
(71) Applicant: BOTTERO S.p.A., 12010 Cuneo (IT)
(72) Inventor: Ghinamo, Paolo, 12012 Boves (IT); Giorsetti, Roberto, 12016 Peveragno (IT); Aimar, Giacomo, 12010 Cervasca (IT)
(74) Representative: Eccetto, Mauro

(57) **Abstract**

In an overhead gripping and conveying system (1) for sheets (2) of glass, a gripping device (7) with movable suction cups is operated by an overhead actuating device (8) wherein respective powered carriages (9) run along two straight, parallel, transversely spaced guides (10), and are connected to each other by a rigid structure (12) defined by a single straight, cylindrical tubular member (12) with a constant cross section.

## Description

The present invention relates to an overhead gripping and conveying system for sheets of glass.

For transferring sheets of glass, e.g. to and from stores where the sheets are normally positioned on edge and slightly tilted on fixed supporting structures, overhead gripping and conveying systems are used comprising a normally suction cup type gripping device for engaging the sheets for transfer, and an actuating device for operating the gripping device.

In most applications, the actuating device comprises two powered carriages running along respective parallel, transversely spaced rails; and a supporting structure or frame extending between the carriages and normally made of welded sections and flats.

Though used, known actuating devices of the above type are unsatisfactory in terms of reducing gripping and transfer time, by being extremely heavy and increasing in weight alongside an increase in the distance between the rails, and therefore cannot be used in applications calling for fast acceleration and/or deceleration and high traveling speeds combined with low power consumption.

Known actuating devices also take a long time to produce, owing to the various component parts of the supporting structure having to be prepared, assembled and connected integrally to one another and to the respective carriages.

Finally, the actuating device and conveying system as a whole are particularly bulky, and therefore pose installation and, above all, transport difficulties, to the extent that, following assembly and testing, normally carried out at the maker's, they must be dismantled and reassembled and wired at the user plant, all of which involves a great deal of time and cost.

As regards the gripping device, this normally comprises a number of suction cups fixed to a common frame connected to the supporting structure by a pivot enabling the frame to be rotated about a vertical axis by dedicated actuating assemblies. The pivot and actuating assemblies further increase not only the cost but also the weight of the conveying system, thus limiting any increase in traveling speed and acceleration/deceleration at the approach, gripping, and transfer stages. Positioning the suction cups is particularly time-consuming, as, in most cases, this calls for first rotating the frame 180° about said vertical axis, which must be performed at relatively low speed to prevent rocking the frame and generating stress affecting the stability of the actuating device as a whole.

It is an object of the present invention to provide an overhead gripping and conveying system for sheets of glass, which is lightweight, compact and, at the same time, cheap and easy to produce.

According to the present invention, there is provided an overhead gripping and conveying system for sheets of glass, the system comprising gripping means for engaging a sheet for transfer; and overhead actuating means for operating said gripping means, and in turn comprising two straight, parallel, transversely spaced guides, a carriage running along each of said straight guides, and a rigid structure connecting said carriages to each other; characterized in that said rigid structure comprises a single straight, cylindrical tubular member.

A non-limiting embodiment of the invention will be described by way of example with reference to the accompanying drawings, in which:
Figure 1 shows a partial side view of a preferred embodiment of the overhead system for gripping and conveying sheets of glass according to the present invention;
Figure 2 shows a larger-scale section, with parts removed for clarity, along line II-II in Figure 1;
Figure 3 shows a much larger-scale section along line III-III in Figure 2.

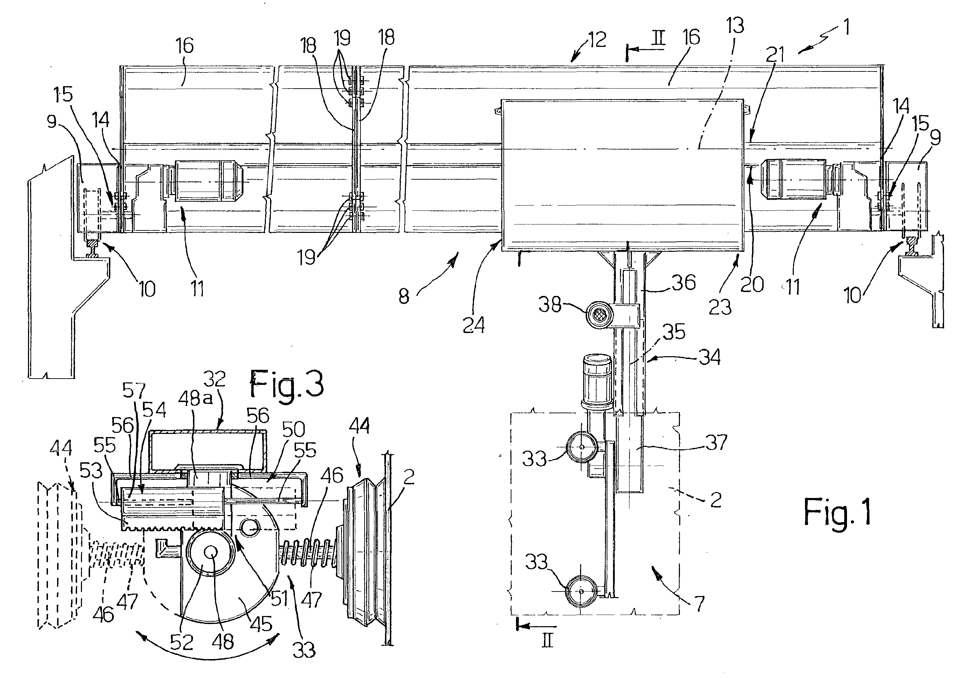

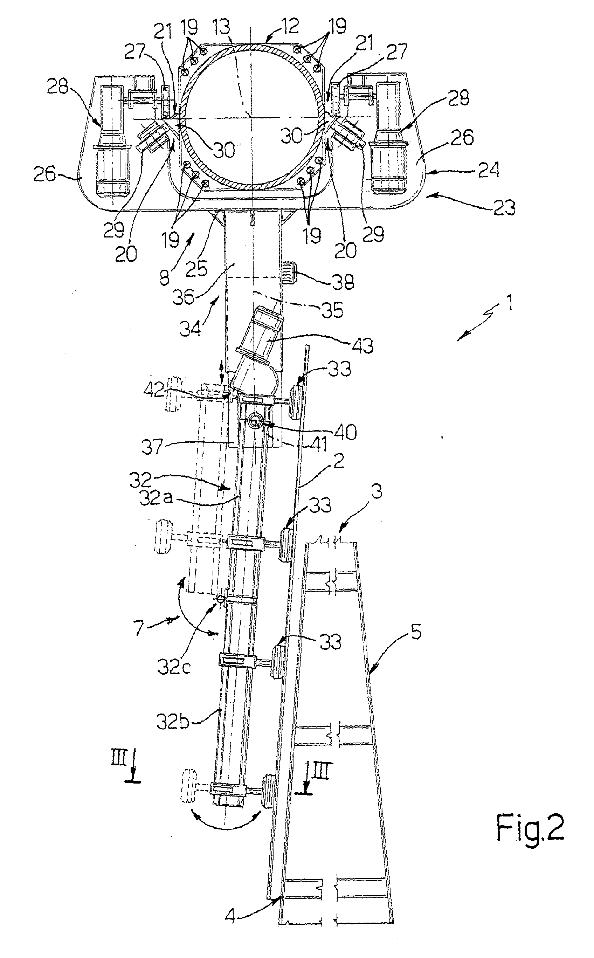

Number 1 in Figures 1 and 2 indicates an overhead system for gripping and conveying sheets of glass 2 to or from, in the example shown, a floor-mounted support 3 shown partly in Figure 2 and comprising two upwardly-converging supporting surfaces 4 and 5.

System 1 comprises a gripping device 7 for gripping sheets 2 and described in detail later on; and an actuating device 8 for operating gripping device 7.

Device 8 comprises two powered carriages 9 running along respective parallel, transversely spaced, overhead rails 10 extending in a raised position with respect to support 3. Each carriage 9 is moved along respective rail 10 by a respective known motor reducer 11, and is connected integrally to the other carriage 9 by a single cylindrical tubular beam 12, which has a constant circular cross section, has a respective axis of symmetry 13 perpendicular to rails 10, and is connected integrally to carriages 9 by a number of bolts 15, only one of which is shown in Figure 1.

In the example shown, beam 12 is defined by two commercial, circular-section, constant-thickness, tubular bodies 16, which are each made in one piece of metal material, are aligned with each other, are welded at the ends facing carriages 9 with respective outer flanges 14 connected to the carriages by bolts 15, and are welded at the adjacent inner ends with respective flanges 18. Flanges 18 are the same as flanges 14, are welded to respective bodies 16, and are connected integrally to each other by a number of bolts 19 extending through respective peripheral holes formed through flanges 18. In a variation not shown, beam 12 comprises a single one-piece body 16 of metal material, the flanges 14 and 18 of which are connected directly to carriages 9.

With reference to Figure 1 and particularly Figure 2, beam 12 also comprises two diametrically-opposite, tubular metal brackets 20, which extend the full length of beam 12, perpendicularly to rails 10, and are welded integrally to beam 12. More specifically, each bracket 20 has a triangular cross section, and comprises a top wall 21 defined upwards by a flat elongated surface lying in a horizontal plane parallel to rails 10 and in turn defining a rail for a powered carriage 23 movable axially along beam 12.

With reference to Figure 2, carriage 23 comprises a U-shaped frame 24 surrounding the underside of beam 12 and in turn comprising a bottom portion 25, and two lateral portions 26 (Figure 2) located on opposite sides of beam 12 and each supporting two or more wheels 27 (only one shown in Figure 2) rolled along relative wall 21 by a respective known motor reducer 28 housed inside frame 24.

Each lateral portion 26 is also fitted in rotary manner with two or more idle, lateral-counterbalance wheels 29, which roll along a relative rolling track defined by a sloping lateral wall 30 of relative bracket 20.

With reference to Figures 1 and 2, gripping device 7 is suspended from carriage 23, and comprises a frame 32, which supports a number of suction cup heads 33 forming part of device 7, and in turn comprises two flat portions 32a and 32b connected to each other by a hinge 32c to rotate with respect to each other between an open work position, in which the portions are aligned as shown in Figure 2, and a rest position in which the two portions are folded one over the other. Frame 32 is connected to carriage 23 by a known powered telescopic joint 34 having a respective vertical axis 35 and comprising a fixed hollow shaft 36 connected integrally to portion 25 of carriage 23 and coaxial with axis 35, and a movable shaft 37 connected in angularly fixed manner to fixed shaft 36 and movable axially by means of a respective motor 38. Frame 32 is connected to a bottom end portion of shaft 37 by a hinge 40 having a hinge axis 41 (Figure 2) perpendicular to axis 35, and is swung about axis 41 under the control of a known actuating assembly 42 comprising a drive motor 43.

With reference to Figure 2 and particularly Figure 3, each suction head 33 comprises a suction cup 44; and a connecting body 45, to which a straight, hollow supporting arm 46 connecting suction cup 44 to a suction unit (not shown) is connected in axially sliding manner via the interposition of a helical compression spring 47 wound about arm 46. Connecting body 45 is hinged to a fork 48a, integral with frame 32, by a hinge pin 48 perpendicular to axis 41, so as to rotate, with respect to frame 32, between two limit angular work positions substantially 180° apart (Figure 3) - wherein arm 46 extends perpendicular to axis 41 and to pin 48, and suction cup 44 engages and retains a sheet 2 for transfer - and through a rest or head 33 cutout position wherein the arm 46 extends parallel to axis 41, and head 33 is housed inside frame 32 to avoid interfering with the sheet 2 gripped by the other heads 33 in the work position. Each body 45 and respective suction cup 44 are rotated about the axis of pin 48 between the above positions by a respective powered actuating assembly 50 comprising a rack and pinion assembly 51, the pinion 52 of which is connected integrally to body 45 and coaxial with pin 48, and the rack 53 of which is carried by a linear actuator 54. In the example shown, actuator 54 is a double-acting pneumatic jack, which comprises two opposite output rods 55, each connected integrally at the free end to frame 32 by a respective L-shaped bracket 56; and a jacket 57 movable axially along rods 55 and fitted integrally with rack 53.

In actual use, frame 32 is moved in a horizontal plane, is adjusted in height with respect to the horizontal plane by operating motor reducers 11 and 28 and motor 38 in known manner, and is tilted with respect to a vertical plane by so operating actuating assembly 42 that all the suction heads 33 on the frame are equioriented and disposed in a plane parallel to surface 4 of support 3; at which point, sheets 2 may be loaded or unloaded on or off surface 4 in known manner. To load or unload sheets 2 on or off surface 5 of support 3, actuators 54 are first operated to move respective heads 33 into the opposite work position shown by the dash line in Figures 2 and 3 for one head 33 only; actuating assembly 42 is then operated to rotate frame 32 about axis 41 and position suction cups 44 in a plane parallel to surface 5; and the loading/unloading operations are then performed in known manner.

In the event only some of heads 33 are required to load/unload sheet 2, e.g. because sheet 2 is smaller than or a different shape from frame 32, one or more heads 33 are moved into the rest position by operating respective actuators 54.

As will be clear from the foregoing description, the construction characteristics of system 1 - in particular, the use of a single circular-section tubular beam and the way in which device 7 is made and connected to device 8 - provide for obtaining an overhead gripping and conveying system which, as compared with known solutions and for a given maximum work load, is extremely lightweight and compact. As a result, both the traveling speed and acceleration/deceleration of frame 32 can be increased considerably, thus reducing gripping and transfer time, with relatively little power required, and the whole of device 8 can be moved without dismantling any of the component parts of the system: in particular, without disconnecting carriage 23 from beam 12. More specifically, by folding frame 32 about the hinge and rotating the folded frame about axis 41 into a position perpendicular to axis 35, the whole system can be accommodated in a normal freight container.

As regards beam 12, this is extremely cheap and easy to produce by featuring ordinary cylindrical, constant-section, one-piece, tubular bodies, which are readily available at low cost, and to which two end flanges and two longitudinal lateral brackets are simply welded. Beam 12 can therefore be made of any length by simply cutting a standard-size tubular body, in the case of a short beam, or using a number of cylindrical lengths of the same cross section, which are simply bolted together and therefore easily disconnected and reconnected, with carriage 23 fitted permanently to one of the lengths.

The reduction in weight and cost of system 1, as compared with known solutions, is also due to using orientable gripping heads, which provide for eliminating the pivot and relative actuators, while at the same time enabling sheets to be loaded or unloaded on or off two-sided supports, i.e. with two tilted converging surfaces. From the operating standpoint, eliminating the pivot also provides for obtaining a highly stable gripping and conveying system, by rotation of heads 33 exerting no noticeable stress on frame 32 or, therefore, carriage 23.

Clearly, changes may be made to the system as described herein without, however, departing from the scope of the present invention. In particular, beam 12, while still being tubular, may have a slightly oval section, may have rails formed differently from those described, and may be connected to the carriages otherwise than as described by way of example.

Finally, heads 33 may be connected to frame 32 otherwise than as shown, and be operated by actuating assemblies differing from those described.

## Claims

1. An overhead gripping and conveying system (1) for sheets (2) of glass, the system (1) comprising gripping means (7) for engaging a sheet (2) for transfer; and overhead actuating means (8) for operating said gripping means (7), and in turn comprising two straight, parallel, transversely spaced guides (10), a carriage (9) running along each of said straight guides (10), and a rigid structure (12) connecting said carriages (9) to each other; characterized in that said rigid structure comprises a single straight, cylindrical tubular member (12).

2. A system as claimed in Claim 1, characterized in that said cylindrical tubular member comprises at least one cylindrical tubular body (16) formed in one piece and having a constant annular cross section.

3. A system as claimed in Claim 1 or 2, characterized by comprising first releasable connecting means (14, 15) for connecting said single tubular member (12) to said carriages (9).

4. A system as claimed in Claim 2 or 3, characterized in that said single tubular member (12) comprises at least two identical said cylindrical tubular bodies (16) aligned and coaxial with each other; and second releasable connecting means (18, 19) for connecting said tubular bodies to each other.

5. A system as claimed in Claim 4, characterized in that said second releasable connecting means (18, 19) comprise flange means (18) carried by each of said tubular bodies (16); and a number of bolts (19) for fastening said flange means (18) to each other.

6. A system as claimed in any one of the foregoing Claims, characterized in that said tubular member (12) is fitted integrally with a further straight guide (20) extending between said carriages (9); and by comprising a further carriage (23) connected in sliding manner to said further straight guide (20).

7. A system as claimed in Claim 6, characterized in that said further straight guide (20) comprises two identical opposite elongated tubular brackets (20) located on diametrically-opposite sides of said tubular member (12) and connected integrally to the tubular member.

8. A system as claimed in Claim 7, characterized in that said brackets (20) are welded to said tubular member (12).

9. A system as claimed in any one of the foregoing Claims, characterized in that said tubular member (12) has a circular, substantially constant cross section.

10. A system as claimed in any one of the foregoing Claims, characterized in that said gripping means (7) comprise a supporting frame (32) connected to said tubular member (12); at least one suction cup gripping head (33); and connecting means (48, 48a) for connecting said gripping head (33) to said frame (32) and permitting displacement of said gripping head (33), with respect to the frame (32), between two different operating positions.

11. A system as claimed in Claim 10, characterized in that said connecting means comprise first hinge means (48, 48a) permitting rotation of said gripping head (33) between said two operating positions about a hinge axis (48).

12. A system as claimed in Claim 11, characterized in that said two operating positions are rotated substantially 180° with respect to each other.

13. A system as claimed in one of Claims 10 to 12, characterized in that said connecting means (48, 48a) permit displacement of said gripping head (33) into a rest position preventing any contact with the sheet (2).

14. A system as claimed in any one of Claims 10 to 14, characterized by also comprising actuating means (50) for moving said gripping head (33) between any two of said positions.

15. A system as claimed in Claim 14, characterized in that said actuating means comprise a linear actuator (54) and a linear-to-rotary motion conversion assembly (51).

16. A system as claimed in Claim 15, characterized in that the motion conversion assembly comprises a gear transmission (51).

17. A system as claimed in Claims 6 and 10, characterized by also comprising first telescopic means (34) and second hinge means (40) for connecting said tubular member (12) to said frame (32); first (38) and second (42) actuating means being provided for respectively moving said frame (32) along a vertical axis (35) and rotating the frame (32), about a hinge axis (41) perpendicular to said vertical axis (35), with respect to said tubular member (12).

18. A system as claimed in any one of Claims 10 to 17, characterized in that said frame (32) comprises a first (32a) and at least a second (32b) portion; and further hinge means (32c) interposed between said portions (32a)(32b) to enable said first (32a) and said second (32b) portion to rotate with respect to each other between a stable open operating position wherein said portions (32a)(32b) are aligned with each other, and a stable rest position wherein said two portions (32a)(32b) are folded one over the other.
